# EUROPÄISCHE PATENTANMELDUNG

(11) **EP 3 699 242 A1**
(43) Veröffentlichungstag der Anmeldung: **26.08.2020**
(21) Anmeldenummer: 19158427.5
(22) Anmeldetag: 21.02.2019
(51) Int. Cl.: C09D 5/18, C09D 7/61

(54) **INTUMESZIERENDE ZUSAMMENSETZUNG MIT VERBESSERTEN MECHANISCHEN EIGENSCHAFTEN UND DEREN VERWENDUNG**

(71) Anmelder: Hilti Aktiengesellschaft, 9494 Schaan (LI)
(72) Erfinder: Schlenk, Stefan, 86899 Landsberg (DE); Jochmann, Phillip, 89073 Ulm (DE); Student, Katja, 86152 Augsburg (DE)
(74) Vertreter: Hilti Aktiengesellschaft Corporate Intellectual Property

(57) **Zusammenfassung**

Es wird eine intumeszierende Zusammensetzung beschrieben, die ein organisches wärmehärtbares Polymer als Bindemittel enthält. Durch die erfindungsgemäße Zusammensetzung, deren mechanische Beständigkeit relativ hoch ist, können in einfacher und schneller Weise Beschichtungen aufgetragen werden, wobei die Beschichtung nach dem Härten hoher mechanischer Beanspruchung standhält. Die erfindungsgemäße Zusammensetzung eignet sich besonders für den Brandschutz, insbesondere als Beschichtung von metallischen und nicht metallischen Substraten, etwa Stahlbauteilen, wie Stützen, Trägern, Fachwerkstäben, zur Erhöhung der Feuerwiderstandsdauer.

## Beschreibung

Die vorliegende Erfindung betrifft eine intumeszierende Zusammensetzung mit verbesserten mechanischen Eigenschaften, die ein Bindemittel auf Basis eines organischen wärmehärtbaren Polymers, insbesondere eines Epoxidharzes enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Intumeszierende Zusammensetzungen, auch dämmschichtbildende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein-oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet, was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung lediglich durch Reaktion der Bindemittelbestandteile untereinander erfolgt, so genannte Reaktivsysteme. Ein derartiges System auf Epoxid-Basis ist beispielsweise aus der EP 2935475 A1 bekannt. Sehr ähnliche Systeme mit unterschiedlichen Bindemitteln sind aus der DE 102006056403 A1, EP 2935476 A1, EP 3176232 A1, EP 1355054 A1, DE 102012221451 A1, EP 2955209 A1, EP 2935470 A1, EP 2935469 A1, EP 2810970 A1 und EP3029129 A1 bekannt.

Diese Reaktivsysteme haben jedoch den Nachteil, dass die Eigenschaften der resultierenden Schutzschichten hinsichtlich mechanischer Beanspruchung (Druck, Schlag, Abrieb) und viskoelastischer Eigenschaften (elastische und plastische Verformung) nicht ideal auf die Anwendung angepasst sind.

Dies kann dazu führen, dass die ausgehärtete Beschichtung beschädigt werden kann, in dem etwa Risse entstehen oder die Beschichtung sogar bereichsweise abblättert oder abplatzt. Die beschädigte Beschichtung kann dann ihre Funktion, wie etwa ein ansprechendes Erscheinungsbild, den Schutz der beschichteten Substrate vor Korrosion oder gegen Hitzeeinwirkung oder die Sicherstellung von Luft- und Wasserdichtigkeit nicht mehr vollständig erfüllen.

Um diesem Problem zu begegnen wird ein hoher Aufwand betrieben, die beschichteten Substrate entweder vor mechanischer Beanspruchung zu schützen, etwa durch nachträgliche Verschalung oder dergleichen, oder die Schäden nachträglich auszubessern. Diese Maßnahmen sind jedoch kosten- und zeitintensiv und führen nicht immer zu dem gewünschten Ergebnis.

Der Erfindung liegt daher die Aufgabe zugrunde, eine intumeszierende Zusammensetzung für Beschichtungssystem der eingangs erwähnten Art bereitzustellen, die nach dem Aushärten verbesserte mechanische Eigenschaften aufweist, die insbesondere eine robuste Beschichtung ergibt, die gleichzeitig ihre Elastizität behält und die mechanischer Beanspruchung standhält, ohne dass die Beschichtung Schaden nimmt.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine intumeszierende Zusammensetzung, die ein organisches wärmehärtbares Polymer, einen Säurebildner und wasserlösliche Alkalisilikate umfasst.

Durch die erfindungsgemäße Zusammensetzung können in einfacher und schneller Weise Beschichtungen erhalten werden, die verglichen mit den bisher bekannten Beschichtungen verbesserte mechanische Eigenschaften aufweisen, die insbesondere mechanischer Beanspruchung standhält, ohne dass die Beschichtung Schaden nimmt und durch die auf zusätzliche Maßnahmen zum Schutz der Beschichtung verzichtet werden kann.

Zum besseren Verständnis der Erfindung werden die folgenden Erläuterungen der hierin verwendeten Terminologie als sinnvoll erachtet. Im Sinne der Erfindung:
- bedeutet *"multifunktionell",* dass die entsprechende Verbindung mehr als eine funktionelle Gruppe pro Molekül aufweist; beispielsweise bedeutet multifunktionell im Zusammenhang mit Epoxidverbindungen, dass diese mehr als eine Epoxidgruppen pro Molekül aufweisen, und in Bezug auf etwa Thiol-funktionalisierte Verbindungen, dass diese wenigstens zwei Thiolgruppen (-SH) pro Molekül aufweisen und in Bezug auf etwa Amin-funktionalisierte Verbindungen, dass diese wenigstens zwei Amingruppen (-NR₃) pro Molekül aufweisen; die Gesamtzahl der jeweiligen funktionellen Gruppen ist die Funktionalität der entsprechenden Verbindung;
- bedeutet *"chemische Intumeszenz"* die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- bedeutet *"wärmehärtbar",* dass das funktionelle Gruppen tragende organische Polymer bei der Zugabe eines entsprechenden Härtungsmittels mit diesem bei Raumtemperatur, gegebenenfalls unter Zugabe eines Katalysators, reagiert (vernetzt);
- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;
- ist ein *"Säurebildner"* eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;
- ist ein *"Treibmittel"* eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz); dieser Begriff wird gleichbedeutend mit *"Gasbildner"* verwendet;
- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.
- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.
- Bedeutet *"Epoxidäquivalentgewicht"* diejenige Menge an Epoxidharz in [g], die ein Äquivalent [Val] Epoxidfunktionen besitzt und berechnet sich aus der Molmasse M in [g/Mol] dividiert durch die Funktionalität *f* in [Val/Mol]; (EEW [g/Val]);
- *"ein", "eine", "einer"* als Artikel vor einer chemischen Verbindungsklasse, dass eine oder mehrere unter diese chemische Verbindungsklasse fallende Verbindungen gemeint sein können. In einer bevorzugten Ausführungsform ist mit diesem Artikel nur eine einzelne Verbindung gemeint;
- *"mindestens ein", "mindestens eine", "mindestens einer"* zahlenmäßig *"ein oder mehrere".* In einer bevorzugten Ausführungsform ist mit diesem Begriff zahlenmäßig *"ein", "eine", "einer"* gemeint;
- *"enthalten", "umfassen"* und *"beinhalten",* dass neben den genannten Bestandteilen noch weitere vorhanden sein können. Diese Begriffe sind einschließlich gemeint und umfassen daher auch *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten", "umfassen"* und *"beinhalten"* den Begriff *"bestehen aus"*;
- ein durch Zahlen begrenzter Bereich, z.B. *"von 80°C bis 120°C",* dass die beiden Eckwerte und jeder Wert innerhalb dieses Bereichs einzeln offenbart sind.

Das organische wärmehärtbare Polymer kann eine oder mehrere der folgenden funktionellen Gruppen enthalten: Epoxid-, Amin-, Ester-, Vinyl-, Amid-, Urethan-, Harnstoff-, Mercaptan-, Carbonsäure-, Acryoyl-, Methacryoyl-, Isocyanat-, Alkoxysilyl-, Anhydrid-, Hydroxyl- und Alkoxygruppen.

Organische wärmehärtbare Polymere, die verwendet werden können, sind: Epoxid-funktionelle Harze beispielsweise Harze auf der Basis von Digylcidylethern von Bisphenol A oder Epoxid-funktionelle Polysiloxane, Vinylesterharze beispielsweise (Meth)acrylatharze, Vinyl-funktionalisierte Harze beispielsweise Vinyl-funktionalisierte Polysiloxane und ungesättigte Polyester, Polyole, Alkydharze und Alkoxysilyl-funktionelle organische Harze oder Kombinationen davon. Geeignete Epoxid-funktionelle Harze umfassen: (i) Polyglycidylether, die von mehrwertigen Alkoholen, wie Ethylenglykol, Diethylenglykol, Triethylenglykol, 1,2-Propylenglykol, 1,4-Butylenglykol, 1,5-Pentandiol, 1,2,6-Hexantriol, Glycerin, Trimethylolpropan, Bisphenol A (ein Kondensationsprodukt von Aceton und Phenol), Bisphenol F (ein Kondensationsprodukt von Formaldehyd und Phenol), hydriertem Bisphenol A oder hydriertem Bisphenol F abgeleitet sind; (ii) Polyglycidylether von Polycarbonsäuren, die durch die Reaktion einer Epoxidverbindung, wie Epichlorhydrin mit einer aliphatischen oder aromatischen Polycarbonsäure oder dimerisierter Linolsäure, erhalten werden; (iii) epoxidierte olefinisch ungesättigte alicyclische Verbindungen, wie epoxidierte alicyclische Ether und Ester; (iv) Epoxidharze, die Oxyalkylengruppen enthalten; (v) Epoxidnovolakharze, die durch Reaktion eines Epihalohydrin (z.B. Epichlorhydrin) mit dem Kondensationsprodukt aus Aldehyd mit einem ein- oder mehrwertigen Phenol (z.B. Phenolformaldehydkondensat) erhalten werden; (vi) irgendeines der vorher genannten Epoxid-funktionellen Harze, das mit Polysiloxanseitengruppen modifiziert ist; (vii) einem Silikat-modifizierten Epoxidharz, beispielsweise das Reaktionsprodukt eines Tetraalkoxyorthosilikats oder einem teilweise kondensierten Oligomer davon mit einem Epoxidharz, das Hydroxylgruppen enthält, wie in der WO 2009/019296 beschrieben; und (viii) Mischungen davon.

Das Epoxid-funktionelle Harz hat bevorzugt ein Epoxidäquivalentgewicht im Bereich von 100 bis 3.000 g/eq, stärker bevorzugt 160 bis 1.000 g/eq, und noch stärker bevorzugt 160 bis 500 g/eq. Die organischen wärmehärtbaren Polymere können (Meth)acrylatpolymere sein, die Polymere mit endständigen Acrylat- oder Methacrylatgruppen umfassen. Beispiele geeigneter (Meth)acrylat-funktioneller Polymere sind: Urethanacrylate, Acrylat- oder Methacrylatester, die von einem Epoxidharz abgeleitet sind, Polyolacrylate, Polyetheracrylate, Polyesteracrylate, Melaminharzacrylate, Polyamidacrylate, Acrylpolymere mit angehängten Acrylgruppen, und Silikonacrylate.

Die organischen wärmehärtbaren Polymere können Polysiloxane sein, umfassend (Meth)acrylatharze, die Polysiloxanseitengruppen enthalten, und die in der WO 2010/054984 beschriebenen Polysiloxane, die Epoxid-funktionelle Harze umfassen.

Ist das organische Polymer ein wärmehärtbares Polymer oder enthält das organische Polymer wenigstens ein wärmehärtbares Polymer, umfasst die intumeszierende Zusammensetzung ferner wenigstens ein Härtungsmittel für das wärmehärtbare Polymer. Das wärmehärtbare Polymer oder die wärmehärtbaren Polymere bilden durch Reaktion (Vernetzungsreaktion) mit dem Härtungsmittel oder den Härtungsmitteln eine Beschichtung auf einem Substrat. Die Wahl des Härtungsmittels ist nicht beschränkt, vorausgesetzt es trägt funktionelle Gruppen, die mit den funktionellen Gruppen des wärmehärtbaren Harzes reagieren können, um eine Vernetzung zu bewirken. Ein Fachmann auf dem Gebiet der Beschichtungszusammensetzungen kann aufgrund seines Fachwissens ein geeignetes Härtungsmittel bestimmen. Für Epoxid-funktionelle organische Harze zum Beispiel, enthalten geeignete Härtungsmittel Amin- oder Thiol-funktionelle Gruppen, bevorzugt Amin-funktionelle Gruppen. Geeignete Beispiele an Härtungsmittel sind: Phenolharze, Polyamine, Polythiole, Polyanhydride und Polycarbonsäuren. "*Poly*" bedeutet dabei, dass das Härtungsmittel zwei oder mehr härtbare funktionelle Gruppen umfasst. Beispiele an Phenolharzen sind: Phenolnovolakharze, Bisphenolnovolakharze und Poly-p-vinylphenol.

Beispiele geeigneter Aminhärtungsmittel sind: Polyamide, polymere Mannichbasen, Amin-funktionelle Polypropylen- oder Polyethylenoxide und Polysiloxane, die Amingruppen enthalten. Aminhärtungsmittel bedeutet, dass das Härtungsmittel eine oder mehrere -NH- oder -NH₂-Gruppen enthält. Weitere Aminhärtungsmittel umfassen Aminosilane, wie Alkoxyaminoalkylsilane, 3-Aminopropyltriethoxysilan, 3-Aminopropyltrimethoxysilan, 3-Aminopropylmethyldimethoxysilan und 3-Aminopropylmethyldiethoxysilan, primäre Amine, wie N-(2-Aminoethyl)-3-aminopropyltrimethoxysilan, sekundäre Amine, wie N-Methyl- oder N-Phenyl-3-aminopropyltrimethoxysilan, Polyglykolether-modifizierte Aminosilane und Triamino-funktionelle Propyltrimethoxysilane. Ähnliche Aminosilane, die zwei oder drei Siliziumatome enthalten, können auch verwendet werden. Das Aminhärtungsmittel kann auch ein Addukt einer Epoxid-funktionellen Verbindung mit einer Amin-funktionellen Verbindung ein. Beispiele solcher Addukte sind aus der WO 2007/082853 A1 bekannt.

Beispiele von Thiol-funktionellen Härtungsmittel umfassen Pentaerithrittetrakis(3-mercaptopropionat), Polysulfidharze, Thiol-basierte Härtungsmittel, die durch eine Etherbindung an ein organisches Gerüst gebunden sind, Thiol-funkionelle Silane, wie Mercaptopropyltrimethoxysilan, Mercaptopropyltriethoxysilan, und Thiol-funktionelle Polysiloxane.

Beispiele von Polyanhydrid-Härtungsmittel umfassen Phthalsäureanhydrid, Tetrahydrophthalsäureanhydrid, Methyltetrahydrophthalsäureanhydrid, 3,6- Endomethylentetrahydrophthalsäureanhydrid, Hexachlorendomethylentetrahydrophthalsäureanhydride und Methyl-3,6-endomethylentetrahydrophthalsäureanhydrid.

Isocyanat-Härtungsmittel für Polyole umfassen beispielsweise Methylendiphenyldiisocyanat, Toluoldiisocyanat, Hexamethylendiisocyanat, Isophorondiisocyanat und polymere Formen und Mischungen davon.

Damit die Zusammensetzung das Bauteil, auch das sie aufgebracht wurde, vor Feuer oder gegen große Hitzeeinwirkung etwa in Folge eines Brandes schützen kann, ist es erforderlich, dass die Zusammensetzung durch den Temperatureintrag eine isolierende Schicht bildet.

Zweckmäßig werden hierzu Verbindungen, auch dämmschichtbildende Additive genannt, eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator (auch Säurebildner genannt) und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

Es sei erwähnt, dass das Bindemittel im Brandfall selbst auch die Funktion eines Kohlenstofflieferanten und/oder Treibmittels haben kann. Die erfindungsgemäße Zusammensetzung umfasst ein wärmehärtbares organisches Polymer als Bindemittel, welches aufgrund seiner funktionellen Gruppen und seines Kohlenstoffgerüstes sowohl die Funktion eines Kohlenstofflieferanten als auch die eines Treibmittels erfüllen kann, wodurch diese Bestandteile nicht zwingend vorhanden sein müssen. Hierdurch kann auf zusätzliche Kohlenstofflieferanten und Treibmittel verzichtet werden. Erfindungsgemäß enthält die Zusammensetzung daher einen Säurebildner.

Als Säurebildner bzw. Dehydrierungskatalysatoren kommen die in intumeszierenden Brandschutzformulierungen üblicherweise verwendeten und dem Fachmann bekannten Verbindungen in Betracht, insbesondere ein Salz oder ein Ester einer anorganischen, nicht flüchtigen Säure, ausgewählt unter Schwefelsäure, Phosphorsäure oder Borsäure. Folglich ist der Säurebildner eine phosphor-, schwefel- oder borhaltige Verbindung, welche sich unter Hitzeeinwirkung zersetzt, um eine Säure zu erzeugen. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

In einer Ausführungsform der Erfindung kann die Zusammensetzung als zusätzliches dämmschichtbildendes Additiv einen Kohlenstofflieferanten enthalten.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

In einer weiteren Ausführungsform der Erfindung kann die Zusammensetzung als zusätzliches dämmschichtbildendes Additiv ein Treibmittel enthalten.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer weiteren Ausführungsform der Erfindung kann die Zusammensetzung ferner eine thermisch expandierbare Verbindung, wie eine Graphit-Interkallationsverbindung, die auch als Blähgraphit bekannt sind, enthalten. Diese können ebenfalls ins Bindemittel eingebunden werden.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Das organische wärmehärtbare Polymer, insbesondere das Epoxidharz, ist bevorzugt in einer in einer Menge von 3 bis 95 Gew.-%, besonders bevorzugt in einer Menge von 5 bis 80 Gew.-% in der Zusammensetzung enthalten.

Wird ein Reaktivverdünner verwendet, so ist dieser in einer Menge von 0,25 bis 70 Gew.-%, bevorzugt in einer Menge von 0,5 bis 50 Gew.-% in der Zusammensetzung enthalten.

Das Härtungsmittel, insbesondere die Amin-funktionalisierte bzw. die Thiol-funktionalisierte Verbindung, ist bevorzugt in einer Menge von 5 bis 97 Gew.-%, besonders bevorzugt in einer Menge von 5 bis 95 Gew.-% in der Zusammensetzung enthalten. Wird eine Mischung aus der Amin-funktionalisierten und der Thiol-funktionalisierten Verbindung verwendet, so beziehen sich die eben genannten Mengen auf die Mischung.

Der Säurebildner beziehungsweise die dämmschichtbildenden Additive können in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil in der Zusammensetzung so hoch wie möglich eingestellt. Bevorzugt beträgt der Anteil in der Zusammensetzung 35 bis 85 Gew.-% und besonders bevorzugt 40 bis 85 Gew.-%.

Die Zusammensetzung kann als Paste mit einem Pinsel, einer Rolle oder durch Sprühen auf das Substrat, insbesondere metallische Substrat aufgebracht werden. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine hohe mechanische Beständigkeit aus.

Die erfindungsgemäße Zusammensetzung ist besonders als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung von metallischen und/oder nicht metallischen Substraten, ganz besonders für Konstruktionselemente oder Bauelemente aus Stahl, Beton, Holz und anderen Materialien, wie etwa Kunststoffen, insbesondere als Brandschutzbeschichtung.

Die folgenden Beispiele dienen der weiteren Erläuterung der Erfindung.

### AUSFÜHRUNGSBEISPIELE

Anhand der Ausführungsbeispiele wir gezeigt, dass durch die Verwendung von wasserlöslichen Alkalisilikaten die mechanischen Eigenschaften, insbesondere die mechanische Beständigkeit einer Beschichtung verbessert werden kann.

Es wurden die aus Tabelle 1 ersichtlichen Vergleichsformulierung und erfindungsgemäßen Formulierungen hergestellt.

Proben der Zusammensetzungen konnten über mindestens drei Tage bei ca. 22 °C aushärten. Anschließend wurden die mechanischen und elastischen Eigenschaften durch eine Mikrohärte-Messung gemäß ISO 14577 beurteilt. Hierzu wurde ein FISCHERSCOPE HM2000S verwendet und die folgende Methode angewendet: eine Prüfkraft von F = 250 mN wurde über eine Dauer von t_{incr} = 60 s auf den Probenkörper aufgebracht, dann für t_{hold} = 60 s gehalten und danach wieder binnen t_{decr} = 60 s entlastet. Für die Beurteilung der Robustheit und Beständigkeit gegen mechanische Beanspruchung wurden das Eindringkriechen (CIT) und der elastische Anteil der Eindringarbeit (nIT) herangezogen. Während CIT ein Maß für das Nachgeben beim Aufbringen einer konstanten Kraft ist, gibt nIT Aufschluss über das Rückfederverhalten. Hierbei bedeutet eine geringere plastische Verformung eine stärkere elastische Verformung.

Die wiedergegebenen Messwerte ergeben sich aus dem arithmetischen Mittel aus jeweils fünf Messungen. Die erhaltenen Messwerte wurden Normalisiert, so dass die Messungen der Vergleichsformulierung den Wert 1 erhielten.

Die Testparameter waren wie folgt:
Kraft = 250 mN,
Aufbringzeit t_{incr} = 60 s,
Haltezeit t_{hold} = 60 s,
Entlastungszeit t_{decr} = 60 s.

### Liste der in der Vergleichsformulierung und den erfindungsgemäßen Formulierungen verwendeten Bestandteile:

| | |
|---|---|
| Epilox® F16-01 | Epoxidharz auf der Basis von Bisphenol; Viskosität bei 25°C 1200-1600 mPA·s; Epoxidäquivalentgewicht 157-167 g/Äqu; Dichte bei 20°C ca. 1,17 g/cm³; Leuna-Harze GmbH |
| Ancamine® K54 | Tris(dimethylaminomethyl)phenol, techn. Grad; EVONIK Industries AG |
| CeTePox® 2200 H | Mercaptanterminiertes Polymer, Fa. CTP Chemicals And Technologies for Polymers GmbH |
| Exolit® AP 462 | Ammoniumpolyphosphat, mikroverkapselt mit Melamin, Clariant |
| Charmor® PM 40 | Pentaerythritol; Fa. Perstop |
| Melafine® | Melamin; OCI Melamine Americas |
| Kronos® 2056 | Titandioxid; Kronos International, Inc. |
| BYK-W 903 | 2-Methoxy-1-methylethylacetat; BYK-Chemie GmbH |
| INOCOT K-2837 | Kaliumsilikat mit einem Molverhältnis K₂O:SiO₂ = 1 : > 3,20 (40%-ig in Wasser (v/v)); vanBaerle AG. |
| INOSIL XM 35 | Kaliumsilikat in Pulverform mit einem Molverhältnis K₂O:SiO₂ = 1 : > 2,6; vanBaerle AG. |

**Tabelle 1: Zusammensetzung der Vergleichsformulierung und der erfindungsgemäßen Formulierungen, sowie die Ergebnisse der Messungen**

| **Beispiel** | **Vergleich** | **1** | **2** | **3** | **4** | **5** | **6** |
|---|---|---|---|---|---|---|---|
| | | | | | | | |
| Epilox® F 16-01 | 9,5 g | 9,5 g | 9,5 g | 9,5 g | 9,5 g | 9,5 g | 9,5 g |
| Ancamine® K54 | 0,5 g | 0,5 g | 0,5 g | 0,5 g | 0,5 g | 0,5 g | 0,5 g |
| CeTePox® 2200 H | 15,3 g | 15,3 g | 15,3 g | 15,3 g | 15,3 g | 15,3 g | 15,3 g |
| Exolit® AP 462 | 5,0 g | 5,0 g | 5,0 g | 5,0 g | 5,0 g | 5,0 g | 5,0 g |
| Charmor® PM 40 | 5,0 g | 5,0 g | 5,0 g | 5,0 g | 5,0 g | 5,0 g | 5,0 g |
| Melafine® | 5,0 g | 5,0 g | 5,0 g | 5,0 g | 5,0 g | 5,0 g | 5,0 g |
| Kronos® 2056 | 5,0 g | 5,0 g | 5,0 g | 5,0 g | 5,0 g | 5,0 g | 5,0 g |
| BYK-W 903 | 0,34 g | 0,34 g | 0,34 g | 0,34 g | 0,34 g | 0,34 g | 0,34 g |
| INOCOT K-2837 | | 0,5 g | 1,25 g | 2,5 g | | | |
| INOSIL XM 35 | | | | | 0,5 g | 1,25 g | 2,5 g |
| | | | | | | | |
| CIT | 1,0 | 0,29 | 0,20 | 0,22 | 0,48 | 0,45 | 0,38 |
| nIT | 1,0 | 1,19 | 1,24 | 1,24 | 1,17 | 1,17 | 1,19 |

Wie aus der Tabelle 1 ersichtlich ist, wurden die Kaliumsilikate jeweils in drei unterschiedlichen Mengen eingesetzt, so dass die Formulierungen unterschiedliche Konzentrationen davon enthielten (1%, 2,5% und 5%).

Anhand der Tabelle ist der Einfluss der Kaliumsilikate gut zu erkennen. Wie anhand des CIT-Wertes, der bei den erfindungsgemäßen Formulierungen kleiner als der der Vergleichsformulierung ist, gut zu erkennen ist, nimmt die Beständigkeit gegen statische mechanische Beanspruchung zu. Wie anhand der höheren nIT-Werte der erfindungsgemäßen Formulierungen gut zu erkennen ist, nehmen die elastischen Eigenschaften der ausgehärteten Beschichtung zu.

## Patentansprüche

1. Intumeszierende Zusammensetzung, umfassend ein organisches wärmehärtbares Polymer, einen Säurebildner und wasserlösliche Alkalisilikate.

2. Zusammensetzung nach Anspruch 1, wobei der Säurebildner eine phosphor-, schwefel- oder borhaltige Verbindung ist, welche sich unter Hitzeeinwirkung zersetzt, um eine Säure zu erzeugen.

3. Zusammensetzung nach Anspruch 1 oder 2, wobei das wasserlösliche Alkalisilikat die Formel (I), M₂O·nSiO₂ (I), hat, in der M für ein Alkalimetall steht und n eine Zahl von 1 bis 4 ist.

4. Zusammensetzung nach einem der vorhergehenden Ansprüche, wobei die Zusammensetzung ferner ein Härtungsmittel für das organische wärmehärtbare Polymer umfasst.

5. Zusammensetzung nach einem der vorhergehenden Ansprüche, wobei das organische wärmehärtbare Polymer eine oder mehrere funktionelle Gruppen, ausgewählt aus der Gruppe bestehend aus Epoxid-, Amin-, Ester-, Vinyl-, Amid-, Urethan-, Harnstoff-, Mercaptan-, Carbonsäure-, Acryoyl-, Methacryoyl-, Isocyanat-, Alkoxysilyl-, Anhydrid-, Hydroxyl- und Alkoxygruppen enthält.

6. Zusammensetzung nach Anspruch 4 und 5, wobei das organische wärmehärtbare Polymer ein Epoxidharz und das Härtungsmittel eine Amin-funktionalisierte Verbindung oder eine Thiol-funktionalisierte Verbindung oder eine Kombination davon ist.

7. Zusammensetzung nach einem der vorhergehenden Ansprüche, wobei die Zusammensetzung ferner einen Katalysator für die Reaktion des Epoxidharzes mit dem Härtungsmittel enthält.

8. Zusammensetzung nach einem der vorhergehenden Ansprüche, wobei die Zusammensetzung ferner einen Kohlenstofflieferanten und/oder ein Treibmittel und/oder eine thermisch expandierbare Verbindung umfasst.

9. Zusammensetzung nach einem der vorhergehenden Ansprüche, wobei die Zusammensetzung ferner einen Aschekrustenstabilisator umfasst.

10. Zusammensetzung nach einem der vorhergehenden Ansprüche, wobei die Zusammensetzung ferner organische und/oder anorganische Zuschlagstoffe und/oder weitere Additive umfasst.

11. Zusammensetzung nach einem der vorhergehenden Ansprüche, wobei das organische Polymers in einer Menge von 3 bis 95 Gew.-%, bezogen auf das Gesamtgewicht der Zusammensetzung, enthalten ist.

12. Zusammensetzung nach einem der vorhergehenden Ansprüche, wobei das Härtungsmittel in einer Menge von 5 bis 97 Gew.-%, bezogen auf das Gesamtgewicht der Zusammensetzung, enthalten ist.

13. Zusammensetzung nach einem der vorhergehenden Ansprüche, wobei der Säurebildner in einer Menge von 30 bis 99 Gew.-%, bezogen auf das Gesamtgewicht der Zusammensetzung, enthalten ist.

14. Verwendung der Zusammensetzung nach einem der Ansprüche 1 bis 12 als Beschichtung.

15. Verwendung nach Anspruch 13 für die Beschichtung von metallischen und/oder nicht metallischen Substraten.
